# FASCICULE DE BREVET EUROPEEN

(11) **EP 1 520 772 B1**
(45) Date de publication et mention de la délivrance du brevet: **19.03.2008**
(21) Numéro de dépôt: 04292333.4
(22) Date de dépôt: 30.09.2004
(51) Int. Cl.: B62D 35/02, B60R 13/08

(54) **Deflecteur sous caisse présentant des propriétes de protection acoustique**
Unterbauabweiser mit Lärmschutzeigenschaften
Underbody deflector with sound shielding properties

(30) Priorité: 02.10.2003 FR 0350636
(43) Date de publication de la demande: 06.04.2005
(73) Titulaire: Centre d'Etude et de Recherche pour l'Automobile (CERA), 51100 Reims (FR)
(72) Inventeur: Lemaire, Dominique, 51100 REIMS. (FR); Lullier, Sosthène, 51100 Reims (FR)
(74) Mandataire: Sayettat, Julien Christian

(56) Documents cités:
- EP-A- 0 466 513
- DE-A- 4 412 427
- PATENT ABSTRACTS OF JAPAN vol. 009, no. 282 (M-428), 9 novembre 1985 (1985-11-09) -& JP 60 124578 A (NISSAN JIDOSHA KK), 3 juillet 1985 (1985-07-03)
- PATENT ABSTRACTS OF JAPAN vol. 006, no. 263 (M-181), 22 décembre 1982 (1982-12-22) -& JP 57 155165 A (NISSAN JIDOSHA KK), 25 septembre 1982 (1982-09-25)

## Description

L'invention concerne un déflecteur, présentant des propriétés de protection acoustique, destiné à être monté sous une paroi sous caisse d'un véhicule automobile ainsi qu'un système de protection acoustique d'un plancher automobile intégrant un tel déflecteur.

Il est connu de disposer sous la caisse d'un véhicule automobile un ou plusieurs déflecteurs dont la géométrie est agencée pour améliorer notamment les caractéristiques aérodynamiques du véhicule.

De tels déflecteurs sont usuellement réalisés à base de matière plastique, renforcée ou non, aisément mise en forme à la géométrie attendue.

Si ces déflecteurs permettent de répondre aux caractéristiques aérodynamiques recherchées, ils n'intègrent pas, ou peu, une fonction de protection acoustique, notamment vis-à-vis du transfert de bruit depuis l'extérieur du véhicule vers l'habitacle.

De ce fait, les véhicules automobiles sont pourvus, notamment à l'intérieur du véhicule et au dessus de leur structure de plancher, de moyens de protection acoustique décrits ci-après.

L'isolation acoustique, destinée à réduire l'intensité sonore pénétrant dans l'habitacle, est usuellement traitée par des systèmes de type « masse/ressort », disposés sur la structure de plancher. De tels systèmes sont formés d'un complexe comprenant une couche de matériau déformable élastique, telle qu'une mousse ou un feutre, associée à une couche de masse surfacique élevée.

Ces complexes peuvent être recouverts d'un revêtement d'aspect tel qu'une moquette. De par sa nature poreuse, la moquette possède des propriétés d'absorption acoustique permettant de réduire le bruit qui pénètre dans l'habitacle malgré l'isolation apportée.

D'autre part, il est connu de réaliser l'amortissement vibratoire des tôles de plancher des véhicules par dépôt d'une couche d'un matériau amortissant, par exemple à base de bitume (traitement parfois dénommé IFF (Insonorisant en Feuille Fusible)).

On le voit, de tels traitements acoustiques sont complexes et requièrent de multiples étapes de réalisation.

Le document DE-44 12 427 prévoit de disposer un matériau d'absorption acoustique poreux entre un déflecteur et une paroi sous caisse de véhicule automobile.

L'invention a pour but d'apporter une simplification dans la réalisation du traitement acoustique des véhicules automobiles, du fait de l'intégration d'une fonction acoustique, isolante et/ou amortissante, aux déflecteurs disposés sous la caisse.

A cet effet l'invention propose un déflecteur comprenant un panneau rigide, ledit déflecteur étant destiné à être monté sous une paroi sous caisse de véhicule automobile en formant un espace entre ledit panneau et ladite paroi, ledit déflecteur comprenant en outre, disposé sur la face interne dudit panneau, au moins un élément étendu de garnissage de l'espace, ledit élément étant déformable et élastique, le déflecteur étant agencé de sorte à permettre une compression d'au moins un élément, au moins localement, une fois le déflecteur monté sous la paroi.

Un tel agencement peut être obtenu par exemple en prévoyant une épaisseur de l'élément déformable qui soit supérieure à l'espace disponible entre le panneau rigide et la paroi sous caisse. L'élément déformable se trouve ainsi comprimé après montage du déflecteur.

Une telle configuration, prévoyant d'intercaler entre le panneau rigide et la paroi sous caisse un élément déformable, permet de réaliser, du fait de l'élasticité de l'élément déformable, un système masse/ressort, la masse étant formée par le panneau et le ressort par l'élément déformable.

Dans une réalisation particulière, l'élément déformable est comprimé sur toute sa surface.

On réalise ainsi un effet amortissant, combiné à l'effet isolant précédemment décrit, ceci par compression de tout ou partie de l'élément déformable contre la paroi dont on veut amortir les vibrations.

Selon une réalisation, le taux de compression est faible, par exemple sensiblement inférieur ou égal à 5%. En effet, l'amortissement diminue avec le taux de compression. La compression est donc ajustée afin de combiner au mieux l'effet amortissant et l'effet isolant.

Par élément étendu, on entend un élément dont la surface n'est pas négligeable par rapport à celle du panneau, par opposition notamment à une rondelle ou à un plot.

Plus particulièrement, l'élément déformable peut se présenter sous forme d'une couche, ladite couche recouvrant au moins une partie continue du panneau rigide.

Dans une réalisation particulière, la couche peut recouvrir la quasi totalité de la face interne du panneau, c'est à dire sa face tournée vers le véhicule.

L'intégration de l'élément déformable dans l'espace disponible permet en outre d'amortir le bruit des gravillons projetés contre le panneau, et aussi d'empêcher leur insertion entre le panneau et la paroi.

En fonction de l'agencement retenu, le taux de compression de l'élément déformable est plus ou moins important, ce dernier étant ajusté en fonction des caractéristiques respectives d'isolation et d'amortissement attendues.

Il est également possible de jouer sur la masse surfacique du panneau rigide pour affiner les caractéristiques de protection acoustique du déflecteur.

L'élément déformable comprend par exemple un matériau tel qu'un feutre, une mousse souple ou un élastomère, le choix du matériau étant dicté par les performances acoustiques requises et/ou par la géométrie de l'élément déformable.

Par exemple, un feutre ou une mousse refendue seront particulièrement adaptés lorsque l'élément déformable présente une épaisseur sensiblement constante.

En revanche, dans le cas d'un élément déformable dont l'épaisseur présente des variations importantes, celui-ci peut être obtenu par moulage de mousse ou d'élastomère.

La réalisation du panneau rigide à base d'un matériau plastique, tel qu'un polypropylène, permet d'intégrer aisément, notamment dans le cas d'un moulage, des éléments fonctionnels tels que des moyens de fixation à la paroi et/ou à l'élément déformable élastique.

Par exemple, le panneau peut être pourvu de picots permettant de l'associer aisément à l'élément déformable élastique.

Pour fixer le déflecteur à la paroi, il peut être prévu, issus du moulage, des orifices, permettant le passage de vis, ou des organes de fixation saillants tels que des clips agencés de sorte à pouvoir être incorporés dans des orifices complémentaires prévus dans la paroi.

Dans le cas où l'élément déformable est poreux, par exemple lorsqu'il comprend un feutre ou une mousse à cellules ouvertes, il peut être recouvert, sur sa face destinée à être disposée en regard de la paroi, d'un film étanche, ledit film étant associé au panneau rigide en périphérie de l'élément déformable, par exemple par une ligne de soudure.

Une telle réalisation permet d'éviter l'absorption par l'élément déformable de liquides tels que l'eau, ce qui nuirait aux caractéristiques acoustiques du déflecteur.

Dans une réalisation, le déflecteur peut comprendre une pluralité d'éléments déformables disposés sensiblement dans un même plan, un ou des éléments pouvant remplir les caractéristiques mentionnées ci-dessus.

Il est ainsi possible de disposer des éléments déformables de caractéristiques différentes sur différentes zones du déflecteur, ceci de façon à optimiser le traitement acoustique du plancher en fonction des nuisances sonores affectant chacune de ses zones.

Une telle modulation peut être apportée par des variations de géométrie entre les éléments déformables, affectant par exemple leur épaisseur donc leur taux de compression après montage du déflecteur. Elle peut aussi être apportée par des variations de leur composition (feutre, mousse,...).

En fonction des contraintes, par exemple géométriques, deux éléments déformables disposés en regard l'un de l'autre peuvent être soit contigus soit disjoints.

Un déflecteur selon l'invention disposé sous une caisse automobile, de par sa capacité à réaliser de l'isolation et/ou de l'amortissement sonore, permet de réduire, voire de supprimer, les traitements d'isolation et/ou d'amortissement disposés usuellement sur la zone de plancher à l'intérieur du véhicule.

Dans certains cas, lorsque est disposé un déflecteur selon l'invention, un traitement acoustique d'absorption, par mise en place d'un revêtement de sol poreux, peut suffire à lui seul au traitement acoustique de la zone de plancher à l'intérieur du véhicule.

Afin d'améliorer les performances d'absorption, le revêtement de sol peut être lui même disposé sur une ou plusieurs couches poreuses, par exemple à base de feutre.

D'autres particularités et avantages de l'invention apparaîtront dans la description qui suit, faite en référence aux figures jointes dans lesquelles :
- La figure 1 représente une vue schématique en perspective d'un déflecteur selon l'invention, selon un mode de réalisation,
- La figure 2 représente une vue en coupe XX' du déflecteur de la figure 1,
- La figure 3 représente une vue en coupe XX' du déflecteur de la figure 1 une fois monté sous une paroi sous caisse.
- La figure 4 représente un graphique de comportement vibratoire, représentant les courbes d'amortissement d'une tôle d'acier galbée nue d'une épaisseur de 0,8 mm, d'une tôle galbée associée à un IFF de 3,2 Kg/m² et d'une tôle galbée associée à un déflecteur selon l'invention.

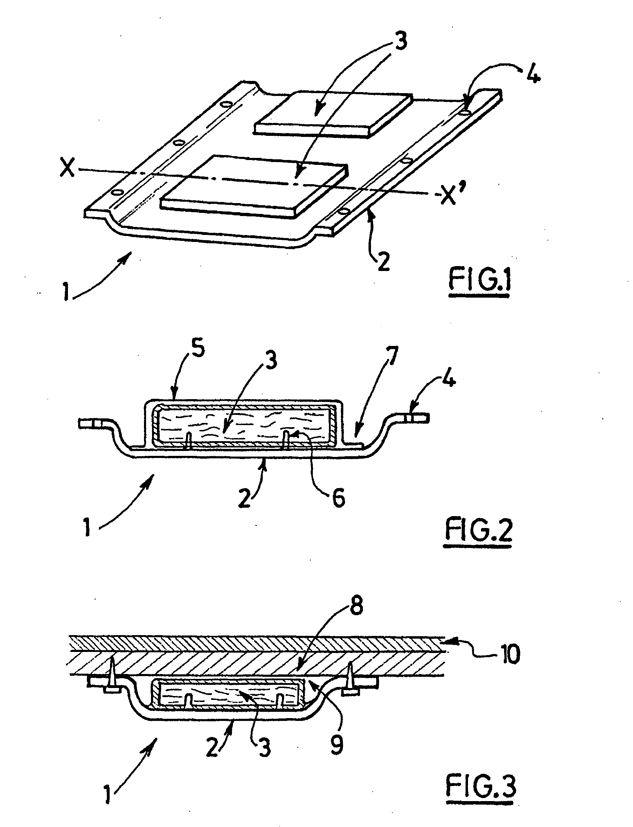

En référence aux figures 1 et 2, on décrit à présent un déflecteur 1 selon un mode de réalisation.

Le déflecteur 1 comprend un panneau rigide 2 et deux éléments déformables 3, ici sous forme de couches sensiblement alignées et disjointes, recouvrant partiellement la face interne du panneau 2, par exemple à base de feutre.

Les éléments 3 pourraient, en variante, être disposés de façon contiguë.

Ils peuvent, en fonction des caractéristiques acoustiques recherchées sur chacune des zones du déflecteur 1, être de géométrie différente (par exemple en épaisseur) et/ou de composition différente (par exemple feutre ou mousse).

En variante, le déflecteur 1 peut comprendre un seul, ou plus de deux, élément(s) déformable(s) 3 défini(s) en fonction des performances attendues et des contraintes géométriques.

Lorsque un seul élément déformable 3 est prévu, il peut se présenter sous forme de couche recouvrant sensiblement la totalité de la face interne du panneau 2.

Le panneau 2 est à base de matière plastique moulée et comprend des moyens de fixation 4 issus directement du moulage, ici des orifices, destinés à permettre le passage ultérieur de vis lors de la fixation du déflecteur sous une caisse automobile.

Par ailleurs, des picots 6, moulés d'une pièce avec le panneau 2, assurent l'assemblage du panneau 2 et de l'élément 3.

Dans la réalisation représentée, un film d'étanchéité 5 est soudé sur le panneau 2 en périphérie d'un élément 3 le long d'une ligne de soudure 7. La présence de ce film 5 est adaptée à la protection d'un élément 3 poreux, tel qu'un feutre, face à des liquides tels que l'eau.

Le déflecteur 1, tel que représenté sur les figures 2 et 3 (respectivement non monté et monté sur le véhicule), est agencé pour induire une compression de l'élément 3, ceci du fait de la surépaisseur dudit élément par rapport à l'espace disponible 9 entre le panneau 2 et la paroi 8, après montage du déflecteur 1 sous la paroi 8.

Selon une réalisation, la compression est sensiblement inférieure ou égale à 5%.

En variante, il peut être prévu que l'élément 3 soit comprimé uniquement sur certaines de ses zones, ceci du fait d'une géométrie appropriée.

La figure 3 met en évidence la compression de l'élément 3 après montage du déflecteur sur la paroi 8. Il est prévu par ailleurs, disposée au dessus de la paroi 8, une couche poreuse 10 telle qu'une moquette, destinée à absorber le bruit intérieur de l'habitacle. En variante non représentée, il peut être prévu en outre des moyens d'isolation et/ou d'amortissement disposés entre la paroi 8 et la couche 10, ceci afin d'optimiser les performances de protection acoustique.

La couche poreuse 10 peut être constituée d'une pluralité de sous couches poreuses de caractéristiques d'absorption différentes.

Les performances d'amortissement du déflecteur combiné à un élément 3 comprimé à 5% sont sensiblement égales à celle d'un IFF de 3,2 Kg/m². On comprend donc que le déflecteur selon l'invention permet un gain de poids considérable tout en présentant de bonnes propriétés d'amortissement et d'isolation.

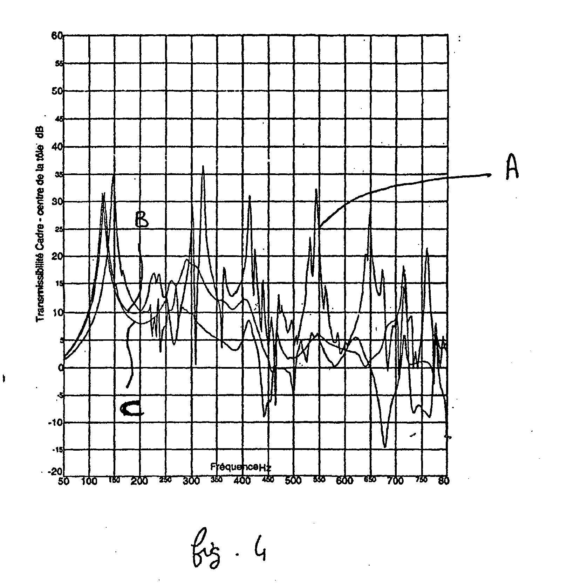

Ces résultats sont représentés sur la figure 4. Sur cette figure, les courbes A, B et C sont respectivement les courbes d'amortissement d'une tôle galbée nue d'une épaisseur de 0,8 mm, d'une tôle galbée associée à un IFF de 3,2 Kg/m² et d'une tôle galbée associée à un déflecteur selon l'invention dont l'élément 3 est comprimé à 5%.

## Revendications

1. Déflecteur (1) comprenant un panneau rigide (2), ledit déflecteur étant destiné à être monté sous une paroi sous caisse (8) de véhicule automobile en formant un espace (9) entre ledit panneau et ladite paroi, ledit déflecteur comprenant en outre, disposé sur la face interne dudit panneau, au moins un élément étendu (3) de garnissage de l'espace (9), ledit élément étant déformable et élastique, ledit déflecteur étant **caractérisé en ce qu**'un élément (3) présente une surépaisseur par rapport à l'espace (9) de sorte à permettre une compression d'au moins un élément (3), au moins localement, une fois le déflecteur (1) monté sous la paroi (8).

2. Déflecteur selon la revendication 1, **caractérisé en ce que** l'élément (3) se présente sous forme d'une couche, ladite couche recouvrant sensiblement la totalité de la face interne du panneau (2).

3. Déflecteur selon la revendication 1, **caractérisé en ce qu**'il comprend une pluralité d'éléments (3) disposés sensiblement dans un même plan.

4. Déflecteur selon l'une quelconque des revendications 1 à 3, **caractérisé en ce qu**'un élément (3) comprend un matériau tel qu'un feutre, une mousse souple ou un élastomère.

5. Déflecteur selon l'une quelconque des revendications 1 à 4, **caractérisé en ce que** le panneau (2) est à base d'un matériau plastique intégrant des éléments fonctionnels (4, 6), tels que des moyens de fixation à la paroi (8) et/ou à un élément (3).

6. Déflecteur selon l'une quelconque des revendications 1 à 5, **caractérisé en ce qu'**un élément (3) est recouvert, sur sa face destinée à être disposée en regard de la paroi (8), d'un film étanche (5), ledit film étant associé au panneau (2) en périphérie de l'élément (3), par exemple par une ligne de soudure (7).

7. Déflecteur selon la revendication 3 **caractérisé en ce qu**'un élément (3) diffère d'un autre par sa géométrie et/ou sa composition.

8. Déflecteur selon l'une quelconque des revendications 1 à 7, **caractérisé en ce qu**e le taux de compression de l'élément (3) est sensiblement inférieur ou égal à 5%.

9. Système de protection acoustique d'un plancher de véhicule automobile comprenant une paroi sous caisse (8), au moins une couche poreuse (10) disposée sur ladite paroi et un déflecteur (1) selon l'une quelconque des revendications précédentes, ledit déflecteur étant monté sous ladite paroi.

## Claims

1. Deflector (1) comprising a rigid panel (2), said deflector being intended for mounting beneath a wall of a motor vehicle underbody (8) while forming a space (9) between said panel and said wall, said deflector further comprising, on the internal side of said panel, at least one extensive element (3) for lining space (9), said element being deformable and elastic, said deflector being **characterised in that** an element (3) has a extra thickness in relation to space (9), so as to enable compression of at least one element (3), at least locally, once the deflector (1) has been mounted on the wall (8).

2. Deflector according to claim 1, **characterised in that** element (3) is in the form of a layer, said layer covering substantially the entire internal face of the panel (2).

3. Deflector according to claim 1, **characterised in that** it includes a plurality of elements (3) disposed substantially in a single plane.

4. Deflector according to any one of claims 1 to 3, **characterised in that** one element (3) includes a material such as felt, a soft foam or an elastomer.

5. Deflector according to any one of claims 1 to 4, **characterised in that** the panel (2) contains a plastic material integrating functional elements (4, 6) such as means of attaching to the wall (8) and/or to an element (3).

6. Deflector according to any one of claims 1 to 5, **characterised in that** one element (3) is covered with an impervious film (5) on the face thereof intended to be disposed opposite the wall (8), said film being associated with panel (2) along the periphery of element (3), for example via a weld line (7).

7. Deflector according to claim 3, **characterised in that** one element (3) differs from another by the geometry and/or composition thereof.

8. Deflector according to any one of claims 1 to 7, **characterised in that** the compression ratio of element (3) is substantially less than or equal to 5%.

9. Noise-shielding system for a motor vehicle floor comprising an underbody wall (8), at least one porous layer (10) disposed on said wall and a deflector (1) according to any one of the preceding claims, said deflector being mounted beneath said wall.

## Patentansprüche

1. Leitschaufel (1) mit einer steifen Platte (2), wobei die besagte Leitschaufel unter einer Wand unter dem Wagenkasten (8) eines Kraftfahrzeugs anzubauen ist, wodurch ein Raum (9) zwischen der besagten Platte und der besagten Leitschaufel gebildet wird, wobei die besagte Leitschaufel weiterhin - auf der Innonseite der besagten Platte angeordnet - mindestens ein erweitertes Element (3) zum Verkleiden des Raums (9) besitzt, wobei das besagte Element verformbar und elastisch ist, wobei die besagte Leitschaufel **dadurch gekennzeichnet ist, dass** ein Element (3) eine Uberstärke gegenüber dem Raum (9) besitzt, so dass die Kompression mindestens eines Elements (3) mindestens lokal möglich ist, nachdem die Leitschaufel (1) unter der Wand (8) angebaut ist.

2. Leitschaufel nach Anspruch 1, **dadurch gekennzeichnet, dass** das Element (3) in Form einer Schicht ausgebildet ist, wobei die besagte Schicht weitgehend die gesamte Innenfläche der Platte (2) abdeckt.

3. Leitschaufel nach Anspruch 1, **dadurch gekennzeichnet, dass** sie eine Mehrzahl von Elementen (3) besitzt, die weitgehend auf derselben Ebene angeordnet sind.

4. Leitschaufel nach einem der Ansprüche 1 bis 3, **dadurch gekennzeichnet, dass** ein Element (3) einen Werkstoff wie Filz, weichen Schaumstoff oder ein Elastomer besitzt.

5. Leitschaufel nach einem der Ansprüche 1 bis 4, **dadurch gekennzeichnet, dass** die Platte (2) auf der Grundlage eines Kunststoffs gefertigt ist, in dem Funktionselemente (4, 6) wie Mittel zum befestigen an der Wand (8) und/oder an einem Element integriert sind.

6. Leitschaufel nach einem der Ansprüche 1 bis 5, **dadurch gekennzeichnet, dass** ein Element (3) auf der Seite, die gegenüber der Wand (8) anzuordnen ist, mit einer dichten Folie (5) abgedeckt ist, wobei die besagte Folie einer Platte (2) im Außenbereich des Elements (3) zugeordnet ist, zum Beispiel durch eine Schweißnaht (7).

7. Leitschaufel nach Anspruch 3, **dadurch gekennzeichnet, dass** sich ein Element (3) durch seine Geometrie und/oder Zusammensetzung von einem anderen unterscheidet.

8. Leitschaufel nach einem der Ansprüche 1 bis 7, **dadurch gekennzeichnet, dass** der Kompressionsgrad des Elements (3) weitgehend kleiner oder gleich 5% beträgt.

9. System zum Lärmschutz eines Kraftfahrzeugbodens, mit einer Wand unter dem Wagenkasten (8), mit mindestens einer porösen Schicht (10), die an der besagten Wand angeordnet ist, und einer Leitschaufel (1) nach einem der vorhergehenden Ansprüche, wobei die besagte Leitschaufel unter der besagten Wand angebaut ist.
